# FASCICULE DE BREVET EUROPEEN

(11) **EP 2 294 535 B1**
(45) Date de publication et mention de la délivrance du brevet: **09.03.2016**
(21) Numéro de dépôt: 09766026.0
(22) Date de dépôt: 21.06.2009
(51) Int. Cl.: G06K 19/077

(54) **CARTE SANS CONTACT AVEC LOGO SECURITAIRE**
KONTAKTLOSE KARTE MIT SICHERHEITSLOGO
CONTACTLESS CARD WITH SECURITY LOGO

(30) Priorité: 20.06.2008 FR 0803472
(43) Date de publication de la demande: 16.03.2011
(73) Titulaire: Smart Packaging Solutions (SPS), 13106 Rousset Cedex (FR)
(72) Inventeur: ARTIGUE, Olivier, F-13530 Trets (FR); SEMORI, Stéphane, F-83400 Hyères (FR); TEBOUL, Deborah, F-13127 Vitrolles (FR); SICOT, Cécile, F-13790 Rousset (FR)
(74) Mandataire: Nicolle, Olivier
(86) Numéro de dépôt international: PCT/FR2009/000747
(87) Numéro de publication internationale: WO 2009/153464

(56) Documents cités:
- WO-A-2004/008397
- WO-A-2008/015363

## Description

L'invention concerne les cartes à puce sans contact, notamment les cartes d'identification ou les passeports électroniques, comportant un logo de sécurité.

L'invention est indépendante de la taille de la carte à puce, et peut s'appliquer aussi bien à des cartes à puce classiques qu'à d'autres documents sécurisés pourvus d'un module électronique de carte sans contact, de sorte que pour simplifier l'exposé, on désignera par le même vocable de « cartes à puce sans contact », aussi bien les cartes à puce au format habituel (selon la norme ISO 7816-1), que les documents de sécurité ayant un autre format mais étant également pourvus d'un module électronique du type de ceux habituellement utilisés dans les cartes à puce sans contact.

### ETAT DE LA TECHNIQUE

On connaît déjà dans l'état de la technique plusieurs types de cartes ou de documents sécurisés comportant une puce électronique.

Ainsi, on connaît des cartes d'identité au format carte à puce à contact, dans lesquelles le module électronique est « encarté» c'est-à-dire fixé dans une cavité du corps de carte, de sorte que les contacts électriques du module restent accessibles en surface pour permettre la connexion à un lecteur de cartes à contact. Ce type de carte d'identité pose le problème de l'accès possible aux contacts, voire du remplacement pur et simple du module électronique, à des fins de fraude à l'identité.

Bien entendu, il serait souhaitable de pourvoir les cartes à puce d'identité à contact, d'un graphisme de sécurité recouvrant la face supérieure de la carte et permettant de détecter les cas de fraude, mais un tel graphisme de sécurité n'est pas aisé à réaliser dans la zone du module électronique car la conductivité des contacts risque d'être compromise.

Afin de résoudre en partie ce problème, le document DE- 196 25 466 C1 a décrit une carte à puce à contact, dont les contacts sont eux-mêmes pourvus d'un graphisme, notamment d'une couleur spécifique différente de la couleur dorée ou argentée habituelle. A cet effet, les contacts sont revêtus d'une couche de dispersion métallique contenant des particules de couleurs à base d'aluminium. Cependant, les contacts restent électriquement accessibles ce qui permet des cas de fraude par attaque du circuit de la puce à travers les contacts de la carte à puce. En outre, les contacts et le module restent physiquement également accessibles, ce qui permet d'envisager de prélever voire de remplacer le module électronique.

On connait également de par le US 6 259 035 B1 une carte à puce à contacts dans laquelle on a cherché à rendre le module électronique et les contacts métalliques aussi discrets que possible dans leur apparence, en colorant les contacts eux-mêmes et en faisant en sorte que le graphisme de la surface du module soit un prolongement du graphisme du corps de carte. Bien entendu, ce procédé est réservé aux cartes à contacts et ne peut pas convenir pour des cartes sans contact telles que celles utilisées pour la fabrication de cartes d'identité sans contact.

Une approche inverse a encore été poursuivie dans le US 5 552 574 qui décrit au contraire la façon de pourvoir la surface des contacts d'une carte à puce à contacts, avec une gravure de sécurité, réalisée à l'aide d'un rayon laser.

Il résulte des exemples précédents que le problème des marquages sécuritaires a été abordé pour les cartes à contacts, soit par des guilloches ou autres graphismes réalisés sur le corps de carte, soit par une altération graphique des contacts métalliques du module, sous forme de couleurs ou de gravure laser réalisés directement sur les contacts.

On connaît par ailleurs l'utilisation de cartes à puce sans contact dans des applications de sécurité ou d'identité, et ces cartes tendent à se répandre dans ces applications, du fait de leur plus grande facilité d'utilisation.

Dans les cartes sans contact, une électronique, comportant une puce reliée à une antenne, est le plus souvent réalisée à part sous la forme d'un insert, qui est ensuite laminé entre des couches externes de protection. L'électronique est alors protégée contre un accès direct par contact, mais il reste néanmoins possible de désolidariser les différentes couches et de remplacer frauduleusement l'insert, voire de le récupérer afin de fabriquer une carte d'identité sans contact contrefaite.

Un autre inconvénient des cartes sans contact réalisées à partir d'un insert intercalé entre des couches de protection externes, tient à leur procédé de fabrication. En effet, l'insert est la partie la plus coûteuse de la carte, et il peut être détérioré pendant la lamination avec les couches externes, ce qui fait chuter le rendement de fabrication de ce type de cartes, et augmenter le coût unitaire.

Il serait donc préférable d'utiliser des procédés de fabrication plus fiables et à rendement plus élevé, comme le procédé classique d'encartage utilisé pour les cartes à contact, consistant à reporter un module à contact dans une cavité de la carte. Mais comme on l'a vu précédemment, ce procédé en tant que tel présente une sécurité faible puisque les cartes ainsi fabriquées sont particulièrement exposées à la fraude consistant à arracher le module de la carte, ce qui est particulièrement contre-indiqué pour des cartes ou documents destinés à des applications de contrôle d'identité.

Par ailleurs, certaines cartes sont réalisées selon la technologie à double interface de communication, et comportent à la fois une électronique sans contact encartée sur le corps de carte et pourvue en outre de contacts pour une communication avec un lecteur de cartes à contacts. Ce type de carte cumule potentiellement les failles de sécurité des deux types de cartes décrites précédemment.

On connaît en outre de par le document D1 = WO 2001/008397 A1 un document de sécurité comprenant un substrat sur lequel est disposé un film pourvu d'un élément visuel unique, tel qu'un hologramme, et un circuit intégré disposé entre le substrat et le film. Compte tenu du fait qu'il s'agisse d'un document de sécurité tel qu'un billet de banque et non d'une carte à puce, il est essentiel que l'épaisseur du document soit maintenue aussi faible que possible. A cet effet, le circuit intégré est disposé dans une cavité du substrat, et de ce fait l'élément visuel peut dépasser de très peu, voire pas du tout, le plan du substrat. Ce document ne décrit pas la manière dont l'élément visuel produit un effet de sécurisation du document.

On connaît également de par le document D2 = WO 2008/015363 A1 une structure de sécurité pour un document sécurisé, comportant un support, un dispositif électronique porté par le support, et au moins un élément de sécurité et/ou décoratif porté par le support. Lorsque plusieurs éléments de sécurité coexistent sur le même support, ils sont disposés l'un par rapport à l'autre sans se superposer. Il n'y a donc pas de possibilité pour que les effets visuels générés par les différents éléments de sécurité se superposent ou interagissent visuellement pour renforcer la sécurité du document.

### BUT de L'INVENTION :

Un but de la présente invention est par conséquent de proposer une structure de carte sans contact apte à remédier aux inconvénients précités des cartes d'identité à puce ou des documents d'identité.

En particulier, un but de la présente invention est de proposer une carte à puce sans contact destinée à des applications de type contrôle d'identité, qui soient aisées à fabriquer avec des rendements élevés comparables aux rendements de fabrication des cartes à contact, tout en étant compatibles avec des graphismes de sécurité tels que des logos ou hologrammes de sécurité.

Un autre but de l'invention est de proposer une carte à puce présentant une très grande fiabilité et longévité lors de son usage, de l'ordre de cinq à dix ans, tout en autorisant un rendement de fabrication élevé et un coût faible, à l'instar des simples cartes à fonctionnement à contact.

A cet effet, l'invention a pour objet une carte à puce sans contact telle que définie dans les revendications.

Selon un mode de réalisation de base très simple, un premier élément de sécurité graphique est simplement constitué par un motif graphique réalisé sur la surface apparente du module électronique sans contact.

Ce motif graphique est constitué par des zones en surépaisseur et des zones en creux par rapport à la surface du module, et/ou par des zones de couleur différente du reste de la surface du module électronique. Ce motif graphique peut être obtenu de diverses manières, notamment par sérigraphie ou gravure chimique, à la manière de la réalisation des contacts métalliques réalisés de manière connue pour des modules pour cartes à contact.

De manière à présenter une sécurité et une résistance accrues par rapport à des attaques physiques du module, ce premier élément de sécurité graphique est surmonté par au moins une couche de protection transparente, notamment en polycarbonate, disposée au-dessus du corps de carte, de façon à recouvrir la face apparente du module électronique sans contact et son motif de sécurité graphique.

Afin d'accroître encore la sécurité du produit et sa résistance à la fraude et à la contrefaçon, la couche de protection transparente ou translucide comporte, sur l'une de ses faces ou dans son épaisseur, un second élément de sécurité graphique, complémentaire de l'élément de sécurité graphique de la surface du module électronique, de façon à former avec lui un élément de sécurité composite par superposition des deux éléments de sécurité individuels.

Ainsi, l'invention prévoit que les deux éléments de sécurité graphiques puissent être deux parties distinctes et complémentaires d'une image ou d'un logo, de sorte que seule la superposition exacte des deux éléments de sécurité graphique permette de reconstituer l'image ou le logo complet.

De cette manière, il est clair que l'élimination de la couche de protection supérieure ferait disparaître le second élément de sécurité graphique, ce qui serait immédiatement visualisable, puisque le logo ou équivalent ne serait plus complet.

Dans une variante intéressante de ce mode de réalisation, le second élément graphique est constitué par un hologramme, présentant un motif complémentaire du graphisme de sécurité de la surface du module électronique, de sorte que la superposition du graphisme de sécurité et de l'hologramme fasse apparaître un logo de sécurité infalsifiable.

Avantageusement, la surface de l'hologramme ou plus généralement de l'un au moins des éléments graphiques, est plus grande que la surface apparente du module et fait corps avec la surface du module, de manière à visualiser plus facilement une extraction frauduleuse de l'un des éléments graphiques.

Afin de pousser encore plus loin la résistance ou la mise en évidence des attaques physiques contre la carte à puce sans contact, la couche de protection transparente est étendue au-delà de la surface supérieure de la carte et est réalisée sous la forme d'une couche de matériau d'encapsulation entourant l'ensemble du corps de carte sur toute sa surface.

Bien entendu, la technique de l'hologramme n'est pas réservée à la couche de protection transparente ou à la couche d'encapsulation, mais l'élément de sécurité graphique de la surface du module électronique peut également ou indépendamment être constitué par un hologramme représentant un motif de sécurité et disposé au-dessus de la face apparente du module, de sorte que l'accès au module nécessite la destruction de l'hologramme.

Les variantes ci-dessus peuvent être réalisées quelle que soit la structure de communication sans contact de la carte, à savoir par exemple que l'antenne de communication peut être directement située sur le module électronique, ou dans le corps de carte, et elle peut également être complémentée par une seconde antenne faisant office d'amplificateur de flux électromagnétique vis-à-vis de la première antenne.

Ainsi, dans une première variante, le corps de carte comporte plusieurs couches de matériau, en matière plastique ou même en papier, et l'antenne est réalisée entre deux couches adjacentes du corps de carte et elle comporte des plots de contact aménagés au fond de la cavité du corps de carte et connectés à des bornes de connexion du module électronique.

Selon une autre variante, l'antenne est réalisée sur le module électronique lui-même et est connectée à la puce électronique de celui-ci, de sorte que le module revêtu de son élément de sécurité graphique peut simplement être reporté et fixé dans la cavité du corps de carte.

Mais la carte peut également comporter une seconde antenne réalisée dans le corps de carte et disposée en regard de l'antenne du module, de façon à amplifier le flux électromagnétique capté par l'antenne du module.

Bien entendu, l'invention s'étend à toutes cartes à puce comportant un corps de carte et un module innovant tel que décrit ci-dessus.

D'autres caractéristiques et avantages de l'invention apparaîtront à la lecture de la description détaillée et des dessins annexés dans lesquels :
- la figure 1 représente une vue en perspective et en coupe d'une carte à puce sans contact pourvue d'un module électronique dont la surface apparente comporte un élément de sécurité graphique selon l'invention ;
- la figure 2 représente une vue analogue à celle de la figure 1, mais dans laquelle la carte à puce comporte une antenne de grande taille intégrée au corps de carte et connectée à des contacts électriques de la puce du module électronique ;
- la figure 3 représente une vue analogue à celle de la figure 2, mais dans laquelle la seconde antenne n'est pas connectée à la puce du module électronique ;
- la figure 4 représente une vue analogue à celle des figures 1 à 3, mais dans lesquelles l'élément de sécurité graphique de la surface du module électronique est recouvert par une couche de protection transparente ;
- la figure 5 illustre les éléments d'un module électronique aptes à créer une image de sécurité par superposition de couches ;
- la figure 6 représente en perspective et en coupe la superposition de couches selon la figure 5c, dans laquelle la couche de protection transparente comporte un second élément de sécurité graphique complémentaire de celui de la surface du module électronique ;
- la figure 7 représente une vue analogue à celles des figures 1 à 3, dans laquelle une couche d'encapsulation transparente couvre l'intégralité de la carte à puce ;
- la figure 8 représente une vue analogue à celle de la figure 6, dans laquelle une couche d'encapsulation transparente couvre l'intégralité de la carte à puce ;

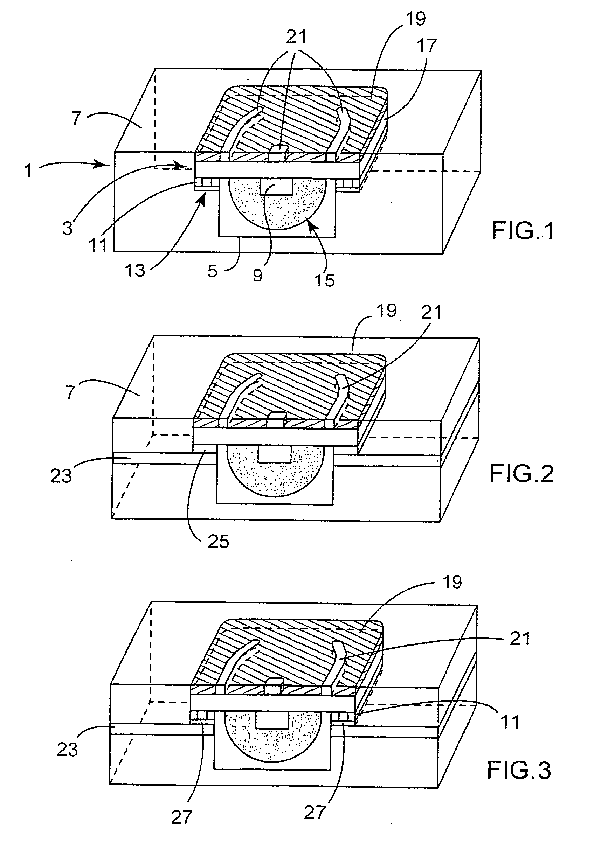

On se réfère à la figure 1. Dans cette figure, on a représenté en perspective et en coupe, une zone de carte à puce 1 sans contact, au voisinage du module électronique 3 de la carte à puce, étant entendu que la zone représentée peut aussi correspondre à une partie d'un document sécurisé ayant un format différent de celui d'une carte à puce, comme par exemple une carte d'identité ou un passeport électronique, et comprenant un module électronique à fonctionnement sans contact.

De façon connue, le module électronique 3 est monté dans une cavité 5 du corps de carte 7. On a représenté de façon schématique une puce 9 fixée sur la face du module opposée à sa face visible. La puce 9 est connectée électriquement aux bornes d'une antenne 11 réalisée sur le module et destinée à assurer la communication sans contact avec un lecteur externe, non représenté. Le module électronique 3 est fixé dans la cavité 5 au moyen d'un adhésif 13. La puce électronique 9 est protégée par une goutte de résine d'encapsulation 15. Lors de l'assemblage de la carte à puce, le module est reporté en face de la cavité 5 aménagée dans le corps de carte. Le module est reporté dans la cavité comme représenté en figure 1, les spires de l'antenne 11 venant en contact avec l'adhésif 13. Il s'ensuit alors une étape de pressage sur la face supérieure du module, pour assurer un collage de bonne qualité du module dans la cavité.

La puce 9 et les spires de l'antenne 11 sont fixées sur une couche support 17 en matériau diélectrique, qui est à son tour surmontée par la face visible 19 du module électronique 3 lorsque celui-ci est en place dans la cavité 5 du corps de carte.

Selon l'invention, cette couche apparente 19, dont la surface affleure la surface du corps de carte, comporte un ou plusieurs éléments de sécurité graphique 21, aptes à protéger le module électronique et la carte sans contact contre des tentatives de fraude. A cet effet, cette couche apparente 19, qui est notamment réalisée en métal comme les contacts bien connus des cartes à puce sans contact, comporte des motifs graphiques, réalisés par des techniques diverses connues en elles-mêmes, comme la gravure, ou l'impression, et aptes à identifier la carte d'identité à puce ou son porteur, ou en tout cas à rendre plus difficile une copie frauduleuse de la carte d'identité.

Ainsi, alors que dans le cas des cartes à contact, la surface du module comporte des contacts électriques de forme et de taille plus ou moins uniformes et normalisées, la carte sans contact selon l'invention comporte des éléments graphiques réalisés avec des technologies similaires connues en elles-mêmes, mais avec une forme et une fonction différente, à savoir le marquage de sécurité des modules des cartes sans contact. Il est à noter qu'un tel marquage n'est pas en lui-même requis pour assurer la fonction de communication de la carte à puce avec un lecteur externe, mais il assure, de par sa difficulté à être copié, une nouvelle fonction de sécurité dans son application à une carte sans contact.

Bien entendu, la taille et la forme des éléments de sécurité graphique 21 peuvent être de toute nature, ainsi que leur mode de réalisation, dans la mesure où elles remplissent l'objectif de sécurité recherché.

Dans la mesure où les éléments de sécurité graphique 21 n'interfèrent pas avec la fonction de communication sans contact de la carte à puce, cette structure de communication peut prendre diverses formes de réalisation.

Ainsi, on a représenté en figure 2 une variante dans laquelle, afin d'accroître la portée de communication de la carte à puce sans contact, une antenne 23 de plus grande taille que l'antenne 11 de la figure 1 a été aménagée entre des couches du corps de carte 7, à la place de l'antenne 11 du module, et cette antenne 23 est connectée à des bornes appropriées de la puce électronique via des plots de connexion 25.

Une autre variante de réalisation a été représentée en figure 3, dans laquelle la seconde antenne 27 est électriquement isolée de l'antenne 11 du module par une couche isolante 27. Ainsi, l'antenne 23 est susceptible d'entrer en résonance avec l'antenne 11 du module, et fait alors office d'amplificateur électromagnétique à l'égard des signaux qui doivent être échangés entre la puce électronique 9 et un lecteur sans contact externe.

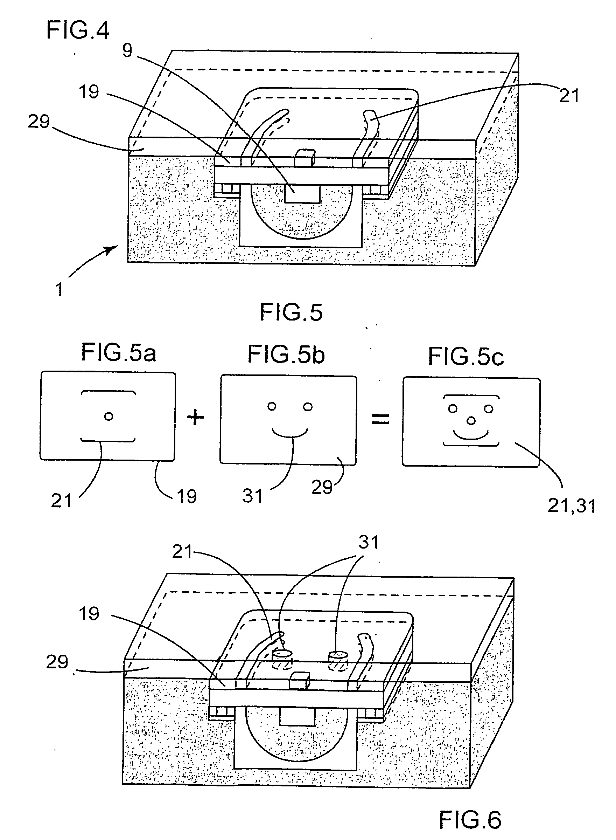

Selon une variante encore plus intéressante de l'invention, représentée schématiquement en figure 4, la couche apparente 19 du module électronique comporte des premiers éléments de sécurité graphique 21, et cette couche apparente 19 est surmontée par au moins une couche de protection 29 transparente ou à tout le moins translucide, disposée au-dessus du corps de carte, de façon à recouvrir la face apparente 19 du module électronique et ses premiers éléments de sécurité graphique 21. On choisira pour la couche de protection 29 un matériau suffisamment résistant pour empêcher sa séparation du reste de la carte, et assez durable pour assurer la longévité requise par les applications de cartes d'identité, typiquement de 5 à 10 ans. Un choix possible sera de réaliser la couche de protection en polycarbonate ou équivalent.

Comme représenté schématiquement en figure 5b, la couche de protection 29 comporte de préférence elle aussi des seconds éléments de sécurité graphique 31, idéalement complémentaires des premiers éléments de sécurité graphique 21 disposés sur la face apparente 19 du module, de manière que leur superposition forme une image composite ou un logo sécuritaire complet (21,31) obtenu par superposition des images des premiers et seconds éléments de sécurité graphique (21,31).

Ainsi, les deux éléments de sécurité graphiques (21,31) sont idéalement deux parties distinctes d'une même image composite ou d'un logo, de sorte que seule la superposition des deux éléments de sécurité graphique permette de reconstituer l'image ou le logo complet. A l'inverse, l'enlèvement ou la détérioration de la couche de protection supérieure 29 ferait immédiatement apparaître visuellement le fait que la carte à puce sans contact a été modifiée et ne peut plus être acceptée par les autorités de gestion de l'application de la carte.

Bien entendu, afin d'éviter les détériorations accidentelles des seconds éléments de sécurité graphique 31, il est préférable que ces derniers soient réalisés soit sur la face de la couche 29 qui est en contact intime avec la face externe de la couche 19, soit dans l'épaisseur de la couche 29, comme représenté en perspective dans la figure 6.

Dans une variante avantageuse de l'invention, lesdits premiers et/ou seconds éléments graphiques 21,31 sont constitués par des hologrammes. Ainsi, l'hologramme 31 présente un motif complémentaire du graphisme de sécurité ou de l'hologramme 21 de la surface du module électronique, de sorte que la superposition du graphisme de sécurité et de l'hologramme, ou des deux hologrammes, fasse apparaître un logo de sécurité infalsifiable.

De préférence, la surface d'au moins l'un des éléments graphiques (21,31) est plus grande que la surface apparente 19 du module et fait corps avec la surface du module, de manière à visualiser plus facilement une extraction frauduleuse de l'un des éléments graphiques (21,31).

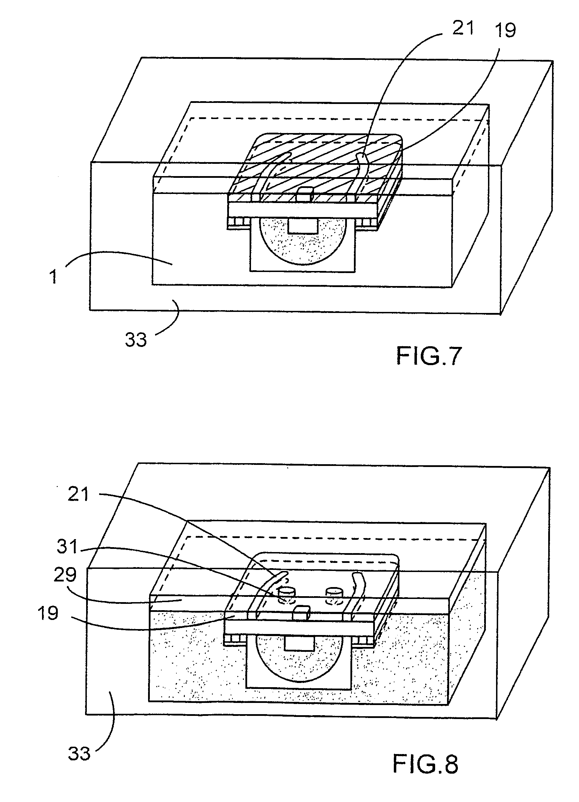

Comme représenté en figure 7, la couche de protection transparente 19 pourvue des éléments de sécurité graphique 21 peut déborder la surface de la carte à puce et être réalisée sous la forme d'une couche de matériau d'encapsulation 33 entourant l'ensemble du corps de carte sur toute sa surface, ce qui rend toute séparation des couches de la carte à puce impossible sans détérioration visible.

Bien entendu, une telle couche d'encapsulation 33 peut également être envisagée dans la cas ou la carte comporte une couche supplémentaire de protection 29 pourvue de seconds moyens de sécurité graphique 31, comme représenté en figure 8.

### AVANTAGES :

L'invention atteint les buts fixés, et propose une carte à puce utilisant un module électronique sans contact, comportant des éléments de sécurité graphique permettant d'accroître sensiblement la résistance aux agressions physiques des cartes sans contact, notamment, mais pas exclusivement, pour les applications de contrôle d'identité du porteur, telles que les cartes d'identité sans contact, et les passeports sans contact.

En réalité, les éléments de sécurité graphique 21 étant réalisés à la surface du module électronique, ce module devient particulièrement simple à utiliser par des industriels non spécialisés dans les cartes sans contact. En effet, il suffit de reporter le module sans contact, déjà sécurisé, dans la cavité d'un corps de carte, en utilisant des procédés d'encartage très classiques et déjà bien connus dans le domaine des cartes à contact, ce qui entraîne un gain important de cadence de fabrication, une augmentation significative des rendements de fabrication et de la fiabilité, et corrélativement une baisse du coût unitaire.

Ainsi il devient possible d'appliquer cette technologie de fabrication de modules avec logo sécuritaire, pour l'obtention de cartes à puce destinées à des applications terrain très sévères, ou de très longue durée d'utilisation, comme par exemple l'application à des cartes d'identité ou à des passeports électroniques, pour lesquels les offices gouvernementaux exigent en général une garantie de bonne tenue et de bon fonctionnement pendant dix ans.

## Revendications

1. Carte à puce (1) sans contact, comportant un corps de carte (7) et un module électronique (3) pourvu d'une puce électronique (9) connectée aux bornes d'une antenne (11), le module électronique (3) étant disposé dans une cavité (5) aménagée dans le corps de carte, la surface apparente (19) du module électronique (3) comportant au moins un premier élément de sécurité graphique (21) surmonté par au moins une couche de protection transparente (29) disposée au-dessus du corps de carte de façon à recouvrir et à protéger la face apparente (19) du module électronique, ledit premier élément de sécurité graphique (21) étant constitué par un motif graphique comportant des zones en surépaisseur et des zones en creux par rapport à la surface du module électronique et/ou par des zones de couleur différente du reste de la surface du module électronique, lesdites zones en surépaisseur et en creux et/ou les zones de couleur différente formant un marquage de sécurité du module électronique apte à protéger ledit module électronique et la carte sans contact contre des tentatives de fraude par extraction de l'élément de sécurité graphique (21), **caractérisée en ce que** ladite couche de protection transparente (29) comporte au moins un second élément de sécurité graphique (31), complémentaire dudit premier élément de sécurité graphique (21), de façon à former avec lui un élément de sécurité composite (21,31) par superposition des deux éléments de sécurité (21 ; 31).

2. Carte à puce selon la revendication 1, **caractérisée en ce que** les deux éléments de sécurité graphiques (21,31) sont deux parties distinctes d'une image ou d'un logo, de sorte que la superposition des deux éléments de sécurité graphique (21,31) permette de reconstituer l'image ou le logo complet.

3. Carte à puce selon la revendication 2, **caractérisé en ce que** la surface d'au moins l'un des éléments graphiques (21,31) est plus grande que la surface apparente du module et est solidaire de la surface du module, de manière à visualiser plus facilement une extraction frauduleuse de l'un des éléments graphiques (21,31).

4. Carte à puce selon la revendication 3, **caractérisée en ce que** lesdits seconds (31) éléments graphiques sont constitués par des hologrammes, et présentent des motifs complémentaires, de sorte que la superposition du graphisme de sécurité et de l'hologramme, ou la superposition des deux hologrammes, fasse apparaître un logo de sécurité infalsifiable.

5. Carte à puce selon la revendication 1, caractérisée en que la couche de protection transparente (29) est réalisée sous la forme d'une couche de matériau d'encapsulation (33) entourant l'ensemble du corps de carte sur toute sa surface.

6. Carte à puce selon l'une quelconque des revendications précédentes, **caractérisée en ce que** le corps de carte (7) comporte plusieurs couches de matériau, et **en ce que** l'antenne (11) de communication est réalisée entre deux couches adjacentes du corps de carte et comporte des plots de contact aménagés au fond de la cavité du corps de carte et connectés à des bornes de connexion du module électronique.

7. Carte à puce selon l'une quelconque des revendications 1 à 6, **caractérisée en ce que** l'antenne de communication (11) est réalisée sur le module électronique (3) lui-même et est connectée à la puce électronique (9) de celui-ci, de sorte que le module (3) revêtu de son élément de sécurité graphique (21) peut simplement être reporté et fixé dans la cavité (5) du corps de carte.

8. Carte à puce selon la revendication 7, **caractérisée en ce qu'**elle comporte une seconde antenne (23) réalisée dans le corps de carte et disposée en regard de l'antenne (11) du module, de façon à amplifier le flux électromagnétique capté par l'antenne du module.

## Patentansprüche

1. Kontaktlose Chipkarte (1), die einen Kartenkörper (7) und eine Elektronikbaugruppe (3) aufweist, die mit einem elektronischen Chip (9) versehen ist, der mit den Anschlüssen einer Antenne (11) verbunden ist, wobei die Elektronikbaugruppe (3) in einem Hohlraum (5) angeordnet ist, der in dem Kartenkörper eingerichtet ist, wobei die sichtbare Seite (19) der Elektronikbaugruppe (3) mindestens ein erstes grafisches Sicherheitselement (21) aufweist, das durch mindestens eine transparente Schutzschicht (29) überlagert ist, die über dem Kartenkörper angeordnet ist, derart, dass die sichtbare Seite (19) der Elektronikbaugruppe überdeckt und geschützt wird, wobei das erste grafische Sicherheitselement (21) aus einem grafischen Motiv, das Zonen mit Überdicke und in Bezug zur Fläche der Elektronikbaugruppe vertiefte Zonen aufweist, und/oder Zonen besteht, deren Farbe sich vom Rest der Fläche der Elektronikbaugruppe unterscheidet, wobei die Zonen mit Überdicke und die vertieften Zonen und/oder die Zonen mit unterschiedlicher Farbe eine Sicherheitsmarkierung der Elektronikbaugruppe bilden, die geeignet ist, die Elektronikbaugruppe und die kontaktlose Karte vor Betrugsversuchen durch Herausreißen des grafischen Sicherheitselements (21) zu schützen, **dadurch gekennzeichnet, dass** die transparente Schutzschicht (29) mindestens ein zweites grafisches Sicherheitselement (31) aufweist, das das erste grafische Sicherheitselement (21) derart ergänzt, dass es mit ihm ein durch Überlagerung der zwei Sicherheitselemente (21; 31) zusammengesetztes Sicherheitselement (21, 31) bildet.

2. Chipkarte nach Anspruch 1, **dadurch gekennzeichnet, dass** die zwei grafischen Sicherheitselemente (21, 31) zwei getrennte Teile eines Bildes oder eines Logos sind, derart, dass die Überlagerung der zwei grafischen Sicherheitselemente (21, 31) das Wiederherstellen des vollständigen Bildes oder Logos ermöglicht.

3. Chipkarte nach Anspruch 2, **dadurch gekennzeichnet, dass** die Fläche von mindestens einem der grafischen Elemente (21, 31) größer ist als die sichtbare Fläche der Baugruppe und fest mit der Fläche der Baugruppe verbunden ist, derart, dass ein betrügerisches Herausziehen von einem der grafischen Elemente (21, 31) besser sichtbar gemacht wird.

4. Chipkarte nach Anspruch 3, **dadurch gekennzeichnet, dass** die zweiten (31) grafischen Elemente aus Hologrammen bestehen und sich ergänzende Motive aufweisen, derart, dass die Überlagerung der grafischen Sicherheitsgestaltung und des Hologramms oder die Überlagerung der zwei Hologramme ein fälschungssicheres Sicherheitslogo zur Erscheinung bringt.

5. Chipkarte nach Anspruch 1, **dadurch gekennzeichnet, dass** die transparente Schutzschicht (29) in der Form einer Schicht (33) aus Verkapselungsmaterial ausgeführt ist, die den gesamten Körper der Karte auf ihrer gesamten Fläche umgibt.

6. Chipkarte nach einem der vorhergehenden Ansprüche, **dadurch gekennzeichnet, dass** der Kartenkörper (7) mehrere Materialschichten aufweist, und dadurch, dass die Kommunikationsantenne (11) zwischen zwei benachbarten Schichten des Kartenkörpers ausgeführt ist und Kontaktstücke aufweist, die im Boden des Hohlraums des Kartenkörpers eingerichtet sind und mit Verbindungsanschlüssen der Elektronikbaugruppe verbunden sind.

7. Chipkarte nach einem der Ansprüche 1 bis 6, **dadurch gekennzeichnet, dass** die Kommunikationsantenne (11) auf der Elektronikbaugruppe (3) selbst ausgeführt ist und mit dem elektronischen Chip (9) davon verbunden ist, derart, dass die mit ihrem grafischen Sicherheitselement (21) bedeckte Baugruppe (3) einfach übertragen und in dem Hohlraum (5) des Kartenkörpers befestigt werden kann.

8. Chipkarte nach Anspruch 7, **dadurch gekennzeichnet, dass** sie eine zweite Antenne (23) aufweist, die in dem Kartenkörper ausgeführt ist und der Antenne (11) der Baugruppe gegenüberstehend angeordnet ist, derart, dass der durch die Antenne der Baugruppe erfasste elektromagnetische Fluss verstärkt wird.

## Claims

1. Contactless smart card (1), comprising a card body (7) and an electronic module (3) provided with an electronic chip (9) connected to the terminals of an antenna (11), the electronic module (3) being placed in a cavity (5) in the card body, the visible surface (19) of the electronic module (3) comprising at least one first graphical security element (21) surmounted by at least one transparent protective layer (29) placed on the card body so as to cover and protect the visible face (19) of the electronic module, said first graphical security element (21) consisting of a graphical pattern comprising zones that protrude and zones that are recessed relative to the surface of the electronic module and/or of zones of different colour from the rest of the surface of the electronic module, said protruding and recessed zones and/or the zones of different colour forming a security marking of the electronic module able to protect said electronic module and the contactless card from attempts at fraud by extraction of the graphical security element (21), **characterized in that** said transparent protective layer (29) comprises at least one second graphical security element (31) that is complementary to said first graphical security element (21), so as to form therewith a composite security element (21, 31) by superposition of the two security elements (21; 31).

2. Smart card according to Claim 1, **characterized in that** the two graphical security elements (21, 31) are two separate portions of an image or a logo, so that superposing the two graphical security elements (21, 31) allows the complete image or logo to be reconstructed.

3. Smart card according to Claim 2, **characterized in that** the area of the surface of at least one of the graphical elements (21, 31) is larger than the visible area of the module and said surface is securely fastened to the surface of the module, so as to make it easier to detect fraudulent extraction of one of the graphical elements (21, 31).

4. Smart card according to Claim 3, **characterized in that** said second graphical elements (31) consist of holograms, and comprise complementary patterns, so that superposing the security graphic and the hologram, or superposing the two holograms, causes an unfalsifiable security logo to appear.

5. Smart card according to Claim 1, **characterized in that** the transparent protective layer (29) takes the form of a layer of encapsulating material (33) that surrounds the card body in its entirety over all its surface.

6. Smart card according to any one of the preceding claims, **characterized in that** the card body (7) comprises a plurality of layers of material, and **in that** the communications antenna (11) is produced between two adjacent layers of the card body and comprises contact pads at the bottom of the cavity in the card body, said pads being connected to connection terminals of the electronic module.

7. Smart card according to any one of Claims 1 to 6, **characterized in that** the communications antenna (11) is produced on the electronic module (3) itself and is connected to the electronic chip (9) of the latter, so that the module (3) coated with its graphical security element (21) may simply be placed and fastened in the cavity (5) of the card body.

8. Smart card according to Claim 7, **characterized in that** it comprises a second antenna (23) produced in the card body and placed facing the antenna (11) of the module, so as to amplify the electromagnetic flux collected by the antenna of the module.
